# EUROPEAN PATENT APPLICATION

(11) **EP 0 719 958 A2**
(43) Date of publication of application: **03.07.1996**
(21) Application number: 95119926.4
(22) Date of filing: 18.12.1995
(51) Int. Cl.: F16G 11/10

(54) **Cord stopper**

(30) Priority: 26.12.1994 JP 322181/94
(71) Applicant: YKK CORPORATION, Chiyoda-ku, Tokyo (JP)
(72) Inventor: Miyasaka, Takayuki, Setagaya-ku, Tokyo (JP); Ishida, Tomohiso, Kamifukuokashi, Saitama-ken (JP); Kasori, Misako, Yokohama-shi, Kanagawa-ken (JP)
(74) Representative: Casalonga, Axel

(57) **Abstract**

A cord stopper (S) for retaining at least one cord (C) at a desired position, comprising: a base (2) having a cord-insertion hole (2a); a cover (1) having a cutout (1c) at one end; connecting means (1b, 2b) for fixedly connecting the base (2) and the cover (1) with each other; a resilient release strip (3) integrally connected to the base (2) at one end remote from the cutout (1c) of the cover (1) and having a free release end (3c) projecting outwardly of the cutout (1c), the release strip (3) having a cord-insertion hole (3a); and a clamp situated at a predetermined position between the fixed end of the release strip (3) and the cord-insertion hole (3a) of the release strip (3) for clamping and securing the cord (C) at the desired position.

## Description

### BACKGROUND OF THE INVENTION

### 1. Field of the Invention:

This invention relates to a cord stopper for retaining and securing a cord, a slender slope, a belt or the like at a desired position to adjust the length of such a cord-like article.

### 2. Description of the Related Art:

A cord stopper for retaining two parallel arranged cords at a desired position is disclosed in, for example, Japanese Laid-Open Publication No. SHO 59-174463. The cord stopper comprises a vertically long base and a cover which are mutually pivotally connected by a central pivot. A spring is mounted between the base and the cover on one side of the pivot so that the base and the cover are normally urged away from each other at one end while they are normally urged toward each other to clamp the cords at the retaining position. The clamping end of each of the base and the cover to clamp the cords is serrated to stably hold the two cords. To release the clamped cords, the base and the cover are gripped together at the normally urged-away end against the bias of the spring to open the clamping ends, thus changing the retaining position of the cords.

As another known example, Japanese Utility Model Publication No. HEI 5-34905 discloses a cord stopper comprises a base having a cord insertion hole in its front part and an inverted generally C-shaped transverse cross section, and a release lever having a generally L-shape longitudinal cross section. In this known cord stopper, the L-angled end of the release lever is directed downwardly touching the front part of the base and is pivotally supported by opposite side walls of the base so that the releaselever can be pivotally moved with respect to the base. With a cord inserted into the cord-insertion hole of the base from the front side of the L-angled end of the release lever, the angled end of the release lever is pivotally moved until it goes over a dead point, so that the cord is firmly clamped between the angled end and the front part of the base.

However, in the cord stopper disclosed in Japanese Patent Laid-Open Publication No. SHO 59-174463, since the clamping of the cord is released simply by griping the base and the cover at their urged-away ends, the clamping ends would accidentally be opened and release the cords, so when, for example, a nearby article happens to strike the surface of the cord stopper, the climbing ends would open so easily, thus making it difficult to retain the stopper stably. Further, since the clamping ends of the cord stopper are serrated, they would happen to clamp a finger, so that the safety is insufficient.

Further, since the cord threaded through the cord stopper between the base and cover from one end to the other end, and the inserted end of the cord is normally retained and secured in an exposed posture, it is inapplicable, when, for instance, the cord stopper is to be attached to the outside surface of a garment in such a manner that the cord end is not exposed.

With the cord stopper disclosed in Japanese Utility Model Laid-Open Publication No. HEI 5-34905, since the cord can be removed from a surface different from the inserted surface, it is unnecessary to expose at least the cord end to the outside when the cord stopper is to be attached to a garment or the like. However, since the cord is clamped and secured between the L-angled end of the release lever and the base by pivotally moving the release lever, the angled end needs to have a necessary length so that the cord stopper cannot be reduced in thickness. And since its shape would be limited, it has been difficult in recent years to give a function as an ornament required for this kind of cord stoppers.

### SUMMARY OF THE INVENTION

It is therefore an object of this invention to provide a cord stopper which can stably retain a cord without unclamping inadvertently, can secure safety and has a high degree of freedom of design, thus making cord stopper fashionable and hence suitable for various uses.

In order to accomplish the above object, according to a first aspect of this invention, there is provided a cord stopper for retaining at least one cord at a desired position, comprising; a base having a cord-insertion hole; a cover connected to the base and having a cord insertion hole at a position out of alignment with the cord-insertion hole of the base; and a clamp situated at a predetermined position between the cord-insertion hole of the base and the cord-insertion hole of the cover for clamping and securing the cord at the desired position.

Further, the cover and the base have connecting means for fixedly connecting the cover and the base with each other. Preferably, the connecting means includes a number of pins formed in the cover and a number of pin-insertion holes formed in the base.

Furthermore, the cover has in one end a cutout, the base has a resilient release strip fixed at one end to the base at an end remote from the cutout and having a free release end projecting outwardly of the cutout. The resilient release strip has a cord-insertion hole, and the clamp is constituted by a projection extending from a position near the fixed end of the resilient release strip toward an inside surface of the cover. Alternatively, the projection may extend from an inside surface of the cover at a position adjacent to the cord-insertion hole of the cover toward the resilient release strip. Preferably, the said projection is in a form of sawteeth but may have a mere smooth surface or a rough surface.

Preferably, the cover is pivotally connected at one end to one end of the base and has a release portion at the other end which has an inwardly directed engaging step, and the clamp is constituted by a projection extending from an inside surface of the cover (4) toward the base which has at an end remote from the pivotally connected end an engaging portion engageable with the engaging step of the cover. It is preferable that the cord stopper further comprises a flat attachment plate attached to a lower surface of the base and having a cord-insertion opening in alignment with said cord-insertion hole of the base. The attachment plate has a surrounding wall extending along a peripheral edge of the cord-insertion opening and adapted to be fitted in the cord-insertion hole of the base. The surrounding wall further has a free edge inclined to match with the cord-insertion hole of the cover. The base and the attachment plate have connecting means for fixedly connecting the cover and the base with each other. The connecting means may include a number of pin-insertion holes formed in the base and a number of pins projecting from the attachment plate.

According to a second aspect of this invention, there is provided a cord stopper for retaining at least one cord at a desired position, comprising: a base having a pair of first and second cord-insertion holes; a cover having a cutout at one end; connecting means for fixedly connecting the base and the cover with each other; a resilient release strip integrally connected at one end remote from the cutout of the base and having a free release end projecting outwardly of the cutout, the release strip having a cord-insertion hole; and a clamp situated at a predetermined position between the fixed end of the release strip and the cord-insertion hole for clamping and securing the cord at the desired position. The clamp is preferably constituted by a projection extending from the release strip toward an inside surface of the cover, or a projection extending from an inside surface of the cover toward the release strip. The projection is preferably in a form of sawteeth but may have a mere smooth surface or a rough surface.

According to a third aspect of this invention, there is provided a cord stopper for retaining at least one cord at a desired position, comprising: a base having an engaging portion at one end and also having first and second cord-insertion holes; a cover pivotally connected at one end to the base remotely from the engaging portion and having at the other end a release portion and an engaging step engageable with the engaging portion; and a clamp situated at a predetermined position between the first and second cord-insertion holes of the base for clamping and securing the cord at the desired position, the clamp being constituted by a projection extending from an inside surface of the cover toward said base. Further, the cord stopper comprises a flat attachment plate attached to a lower surface of the base via a fabric. The attachment plate has first and second surrounding walls fitted in the respective cord-insertion holes of the base, and first and second insertion openings defined in the first and second surronding walls.

In operation, in the cord stopper according to the first-named embodiment, the cord is threaded through the cord stopper, passing through the cord-insertion hole of the cover, then the cord-insertion hole of the resilient release strip and finally the cord-insertion hole of the base. In the absence of any force acting on the cord stopper, the cord is clamped between the inside surface of the cover and the projection of the resilient release strip, or between the resilient release strip and the projection on the inside surface of the cover, as the sawteeth projection bites into the cord.

In the cord stopper according to the third-named embodiment, the cord is threaded through the cord stopper, passing through the first cord-insertion hole of the base, then the cord-insertion hole of the resilient release strip and finally the second cord-insertion hole of the base. In the absence of any force acting on the cord stopper, the cord is clamped between the inside surface of the cover and the projection of the resilient release strip, or between the resilient release strip and the projection on the inside surface of the cover with the sawteeth on the projection biting into the cord.

In the cord stopper in which the cover and the base are fixed, for unclamping the cord to allow the cord stopper to move, the release end of the resilient release strip is pushed downwardly (toward the base) to increase the distance between the inside surface of the cover and the projection of the resilient release strip. Then the cord stopper is moved with any part of the cord free from being compressed in the cord stopper.

In the cord stopper according to the second-named embodiment, when the cord is in a clamped posture, the engaging step of the cover is in engagement with the engaging portion of the base. The cord is threaded through the cord stopper, passing through the cord-insertion hole of the cover and then the cord-insertion hole of the base. From where it is inserted into the cord-insertion hole of the cover to where it reaches the cord-insertion hole of the base, the cord is clamped between the upper surface of the base and the projection on the inside surface of the cover with the projection biting into the cord.

In the cord stopper according to the last-named embodiment, when the cord is in a clamped posture, the engaging step of the cover is in engagement with the engaging portion of the base. The cord is threaded through the cord stopper, passing through the first cord-insertion hole of the base and then the second cord-insertion hole of the base. From where it is inserted into one cord-insertion of the base to where it reaches the other cord-insertion hole of the base, the cord is clamped between the upper surface of the base and the projection on the inside surface of the cover with the projection biting into the cord.

In the cord stopper in which the cover and the base are pivotally connected to each other, for unclamping the cord to allow the cord stopper to move, a flange of the cover is raised to release the engagement between the engaging step of the cover and the engaging portion of the base to pivotally move the cover pivotally connected on the end of the base to open. Thus the cord is unclamped between the upper surface of the base arid the projection on the inside surface of the cover so that any part of the cord is not compressed in the cord stopper, allowing the cord to move freely.

### BRIEF DESCRIPTION OF THE DRAWINGS

FIG. 1 is an exploded perspective view of a cord stopper according to a first embodiment of this invention;
FIG. 2 is a cross-sectional view of the cord stopper of the first embodiment, showing a cord in a clamped posture;
FIG. 3 is a cross-sectional view similar to FIG. 2, but showing the cord in an unclamped posture;
FIG. 4 is a cross-sectional view of a modification of the cord stopper of the first embodiment, showing the cord in a clamped posture;
FIG. 5 is an exploded perspective view of a cord stopper according to a second embodiment;
FIG. 6 is a cross-sectional view of the cord stopper of the second embodiment while being attached to a fabric, showing a cord in a clamped posture;
FIG. 7 is a cross-sectional view of the cord stopper of the second embodiment, showing the cord in an unclamped posture;
FIG. 8 is a cross-sectional view of a modification of the cord stopper of the second embodiment while being attached to a fabric, showing the cord in a clamped posture;
FIG. 9 is a cross-sectional view of the cord stopper of FIG. 8, showing the cord in an unclamped posture;
FIG. 10 is a view showing the cord stoppers of the second embodiment as applied to a garment;
FIG. 11 is a cross-sectional view of a cord stopper according to a third embodiment, showing a cord in a clamped posture; and
FIG. 12 is a cross-sectional view of a cord stopper according to a fourth embodiment, showing a cord in a clamped posture.

### DETAILED DESCRIPTION

Various embodiments of this invention will now be described with reference to the accompanying drawings.

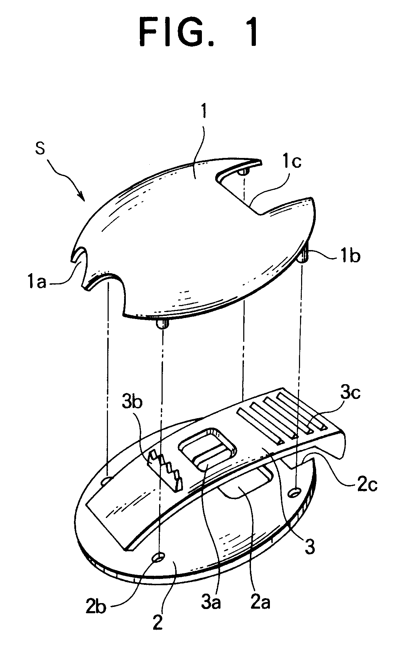

FIG. 1 is an exploded perspective view of a cord stopper according to a first embodiment. The cord stopper S clamps two parallel cords and comprises a cover 1, a base 2 and a resilient release strip 3.

The cover 1 is in the form of an up-side-down shallow bowl having at one end two semicircular cord-insertion holes 1a and at the other end a single cutout 1c. The cover 1 has a plurality of pins 1b projecting from a peripheral edge of the cover 1 as connecting means for connecting the cover 1 to the base 2.

The base 2 is in the form of a flat plate having a peripheral edge substantially similar to that of the cover 1 and also having a cutout 2c at a position in vertical alignment with the cutout 1c of the cover 1. The base 2 has a cord-insertion hole 2a at a position displaced from the center of the base 2 toward the cutout 2c. Further, the base 2 has a plurality of pin-insertion holes 2b at positions in vertical alignment with the pins 1b of the cover 1 as connecting means for connecting the cover 1 to the base 2.

The resilient release strip 3 stands obliquely and fixedly from an end of the base 2 remote from the cutout 2c and has a release end 3c projecting outwardly of the cutout 1c of the cover 1. The release end 3c has on its upper surface a plurality of skid-proof grooves for preventing skid when the release end 3c is depressed by a finger. Further, the resilient release strip 3 has at a central position a cord-insertion hole 3a and at a position toward the fixed end, sawteeth 3b projecting toward the inside surface of the cover 1.

The cover 1 and the base 2 are joined together in such a manner that the resilient release strip 3 on the base 2 is concealed by the cover 1 with the release end 3c projecting outwardly of the cutout 1c of the cover 1, and that the pins 1b of the cover 1 are fitted in the corresponding pin-insertion holes 2b of the base 2. At that time, the resilient release strip 3 is resiliently pressed against the cutout 1c of the cover 1.

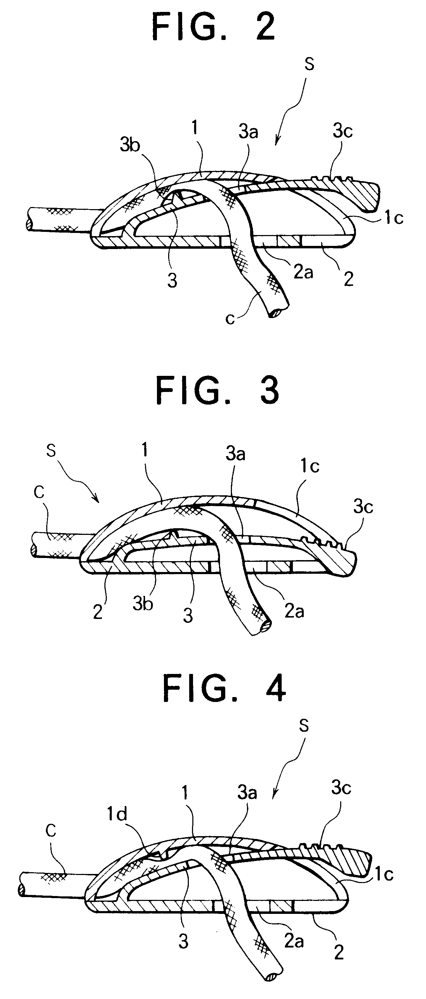

FIG. 2 is a cross sectional view of the cord stopper S, showing the cords C inserted through and the thus joined cord stopper S and clamped as described below. FIG. 3 is a cross-sectional view of the cord stopper S, showing the cords C as unclamped. As shown in FIG. 2, the cords C are threaded through the cord stopper S, passing through the cord-insertion holes 1a of the cover 1, then the cord-insertion hole 3a of the resilient release strip 3 and the cord-insertion bole 2a of the base 2. In the absence of any force acting on the cord stopper S, from where they are inserted into the second cord-insertion holes 1a of the cover 1 to where they reach the cord-insertion hole 3a of the resilient release strip 3, the cords C are clamped between the inside surface of the cover 1 arid the sawteeth 3b projecting on the resilient release strip 3 urged upwardly (toward the cover 1). The release end 3c of the resilient release strip 3 is set in a position lower than the peak of the cover 1.

For unclamping the cords C to allow the cord stopper S to move, the release end 3c of the resilient release strip 3 is pushed downwardly (toward the base 2) to increase the distance between the inside surface of the cover and the sawteeth 3b of the resilient release strip 3, as shown in FIG. 3. Thus any part of cords C is made free from being compressed in the cord stopper S, allowing the cord stopper S to move freely.

FIG. 4 is a cross-sectional view of a modification of the cord stopper S of the first embodiment, showing the cords C threaded through the cord stopper S in a clamped posture. In this modification, the cord stopper S comprises a cover 1, a base 2 and a resilient release strip 3. The clamp is constituted by sawteeth 1d projecting from the inside surface of the cover 1 near the second cord-insertion holes 1a of the cover toward the resilient release strip 3. Thus any part of the cords C is made free from being compressed, allowing the cord stopper S to move. Other structure, operation and result of the cord stopper S of this modification are identical with those of the cord stopper S of the first embodiment.

In the first embodiment and the modification, partly since the clamping portions of the cords C are concealed by the cover 1 and partly since the release end 3c of the resilient release strip 3 is set in a position lower than the peak of the cover 1, the cords C would not happen to be unclamped even when the cover 1 is depressed. Therefore, there is no inconvenience that the cord stopper S would move as the cords C are inadvertently unclamped when the stopper S is hit by a peripheral article. Further, since the sawteeth 1d, 3b exist inside the cover, the user would not happen to touch the sawteeth 1d, 3b, thus securing safety.

Since the sawteeth 1d, 3b press the cords C against the companion member, an adequate degree of clamping force is guaranteed, and it is possible to facilitate clamping and unclamping operation in response to the movement of the cord stopper S. Further, since it is possible to design the shape of the cord stopper S freely, a reduced-thickness type in addition to various shapes can be manufactured by molding; such a thin type cord stopper is particularly suitable, as not deteriorating the appearance, for an ornament on a garment.

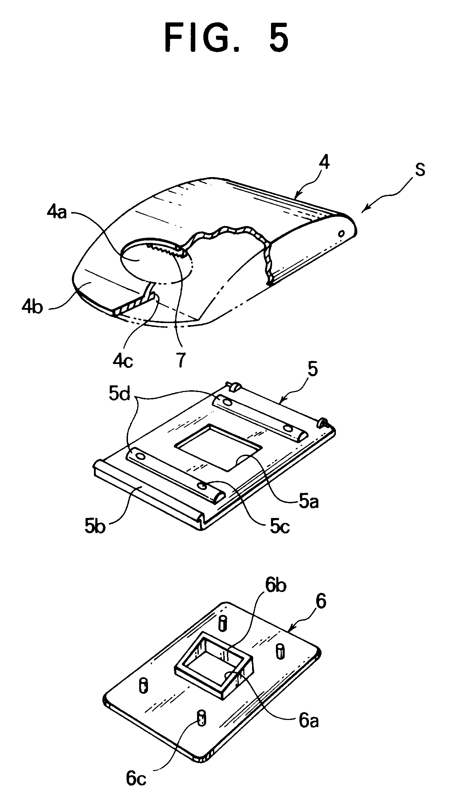

FIG. 5 is an exploded perspective view of a cord stopper S according to a second embodiment of this invention. In the cord stopper S according to the following embodiments, a single cord C is to be clamped. The cord stopper S comprises a cover 4, a base 5 and an attachment member 6. The cover 4 is pivotally connected at one end to one end of the base 5, and the attachment member 6 is attached to the lower surface of the base 5 with a fabric F of a garment or the like therebetween.

The cover 4 is high at the center and has a rectangular (semicylindrical) bottom surface. The cover 4 has at an edge remote from the pivotally connected end of the base 5 a release flange 4b extending horizontally and outwardly, and has inside of the edge an inwardly directed engaging step 4c. Further, the cover 4 has a cord-insertion hole 4a at a position displaced from the center toward the release flange 4b and sawteeth 7 at the clamping portion projecting from the inside surface of the cover 4 at a position immediately above of the cord-insertion hole 4a of the cover 4a toward the base 5.

The base 5 is a flat plate having a peripheral edge substantially similar to that of the cover 4 and also having a central cord-insertion hole 5a. The base 5 is pivotally connected at one end to one end of the cover 4, and has the other end raised, remote from the pivotally connected end. The raised end of the base 5 has at its upper edge an engaging portion 5b engageable with the engaging step 4c of the cover 4. Further, the base 5 has on its upper surface two ridges 5d respectively on opposite sides of the cord-insertion hole 5a. Each ridge 5d has a plurality of pin-insertion holes 5c, so that the surrondings of the pin insertion-holes 5c are reinforced by the ridges 5c.

The attachment member 6 to be attached to the lower surface of the base 5 is a flat plate having a peripheral edge substantially similar to that of the base 5. The attachment plate 6 has, centrally on upper surface, a surrounding wall 6b for being fitted in the first cord-insertion hole 5a of the base 5, in which a cord-insertion hole 6a is formed. A free edge of the surrounding wall 6b is inclined to match with the cord-insertion hole 4a of the cover 4. The height of the lower wall side of the surrounding wall 6b is set to be slightly larger than the sum of the thickness of the base 5 and the thickness of a fabric F to which the cord stopper S is to be attached. The attachment plate 6 has on its upper surface a plurality of pins 6c in vertical alignment with the respective pin-insertion holes 5c of the base 5.

When attaching the cord stopper S of the second embodiment to a fabric F or the like, a hole substantially identical in shape with the cord-insertion hole 5a of the base 5 is previously formed in the fabric F. Then, the fabric F is placed on the lower surface of the base 5 in such a manner that the cord-insertion hole 5a of the bace 5 is aligned with the hole of the fabric F, whereupon the attachment plate 6 is placed over the lower surface of the fabric F to sandwich the fabric F between the base 5 and the attachment plate 6. At that time, the surrounding wall 6b of the attachment plate 6 is fitted in the cord-insertion hole 5a of the base 5 and the hole of the fabric F, and the pins 6c of the attachment plate 6 are fitted in the respective pin insertion holes 5c of the base 5, thus securing the cord stopper S to the fabric F. When fitting the surrounding wall 6b of the attachment plate 6 into the cord-insertion hole 5a of the base 5 and the hole of the fabric F, it is possible to insert the surrounding wall 6b into the cord-insertion hole 5a of the base 5 smoothly as the free edge of the surrounding wall 6b is inclined.

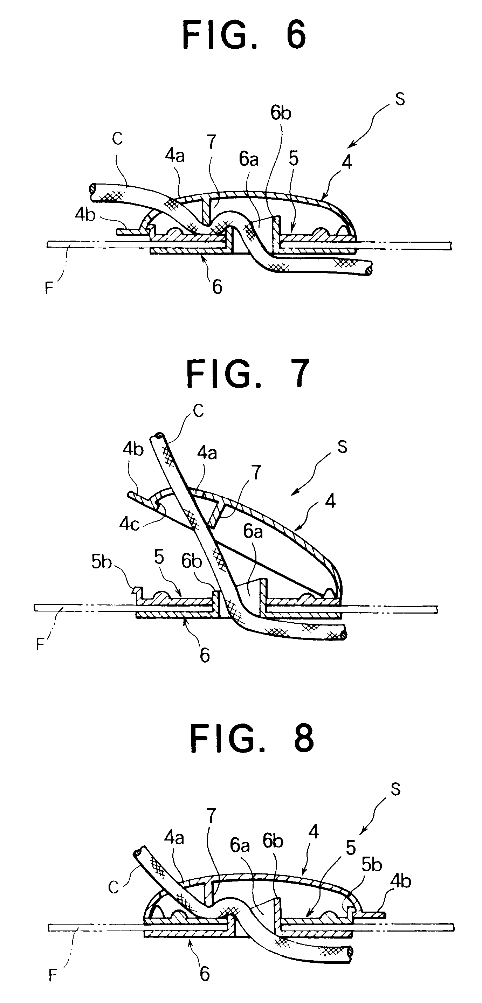

FIG. 6 is a cross sectional view of the cord stopper S thus attached to the fabric F, through which the cord C is threaded through in a a clamped posture. FIG. 7 is a cross-sectional view showing the cord C when unclamped.

When the cord C assumes a clamped posture as shown in FIG. 6, the engaging step 4c of the cover 4 is in engagement with the engaging portion 5b of the base 5. As it is threaded through the cord stopper S, the cord C passes through firstly the cord-insertion hole 4a of the cover 4 and then the cord-insertion hole 5a of the base 5. At that time, the cord C can be threaded through the cord stopper S smoothly as the free edge of the surrounding wall 6b is inclined to match with the cord-insertion hole 4a of the cover 4. From where it is inserted into the cord-insertion hole 4a of the cover 4 to where it reaches the cord-insertion hole 5a of the base 5, the cord C is clamped between the upper surface of the base 5 and the sawteeth 7 on the inside surface of the cover 4. At that time, since the height of the surrounding wall 6b of the cord-insertion opening 6a of the attachment plate 6 is larger than the sum of the thickness of the fabric F and the thickness of the base 5, the cord C is bent so as to go over the surrounding wall 6b when it passes through the cord-insertion hole 5a of the base 5 from the sawteeth 7 serving as a clamp, thus increasing the clamping strength of the cord stopper S against the cord C.

For unclamping the cord C to allow the cord stopper S to move, the flange 4b of the cover 4 is raised to release the engagement between the engaging step 4c of the cover 4 and the engaging portion 5b of the base 5 to pivotally move the cover 4 about the pivotal joint with the base 5 to open the cord stopper S. Thus the cord C is unclamped between the upper surface of the base 5 and the sawteeth 7 on the inside surface of the cover 4 so that any part of the cord C is made free from being compressed in the cord stopper S, allowing the cord C to move freely.

In the second embodiment, since clamping force is obtained by pushing the sawteeth 7 on the inside surface of the cover 4 downwardly (against the upper surface of the base 5), the cord C would not be unclamped when the cord stopper S happens to be hit by a nearby article to depress the cover 4. On the Contrary, the clamping force might be even increased though. There would accordingly not be an inconvenience that the cord stopper S is inadvertently moved. Further, even if the cover 4 is opened when unclamping, the cord C is raised upwardly along with the cover 4 so that the sawteeth 7 is shielded from the surrounds by the cord C to prevent the user from touching the sawteeth 7 by error, thus securing safety.

Of course, with the cord stopper S of the second embodiment, since the cord C is clamped between the sawteeth 7 and the companion member so as to be bent, adequate clamping force can be obtained to facilitate clamping and unclamping operations of the cord stopper S. Further, since it is possible to design the shape of the cord stopper S freely, a reduced-thickness type in addition to various shapes can be manufactured by molding; such a thin type cord stopper is particularly suitable, as not deteriorating the appearance, for an ornament on a garment.

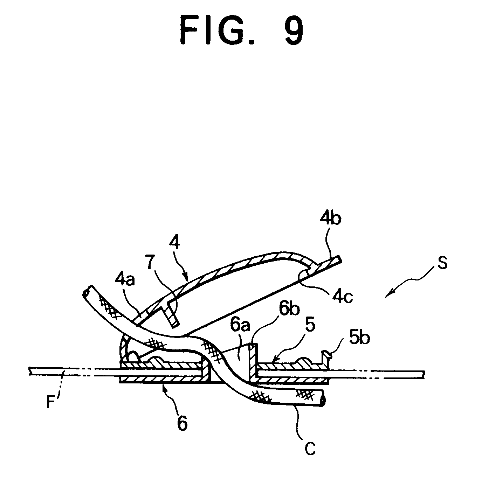

FIGS. 8 and 9 show modifications of the second embodiment. In the modified cord stopper S, the cover 4 has a cord-insertion hole 4a at a position toward the pivotally connected end and also has sawteeth 7 serving as a clamp and projecting from the inside surface, at a position toward the center of the cover 4 near the cord-insertion hole 4a, toward the base 5. Other structures of this modification is identical with those of the second embodiment, and the clamped posture of the cord C in the modification is also similar to the second embodiment.

In this modification, when the cord C is unclamped, results different from those of the second embodiment can be obtained. Specifically, the flange 4b of the cover 4 is raised to release the engagement between the engaging step 4c of the cover 4 and the engaging portion 5b of the base 5 so that the cover 4 is pivotally move about the pivotally joint with the base 5 to unclamp the cord C. At that time, since the cord C is completely released from the sawteeth 7, the degree of freedom of the cord C would become larger than that of the second embodiment to facilitate the smooth movement of the cord stopper S. Since the sawteeth 7 are located near the pivotally connected end, safety can be adequately secured in a normal operation as long as the cover 4 is not unnecessarily widely opened.

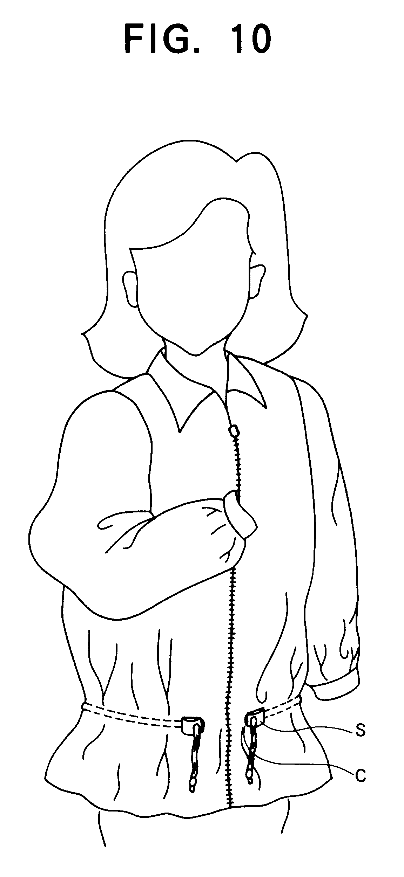

FIG. 10 is a view showing the cord stoppers S of the second embodiment as applied to a jumper as devices to adjust the waist of the jumper. As shown in FIG. 10, since the cord stopper S is molded as a reduced-thickness type, it would never deteriorate the appearance of the jumper.

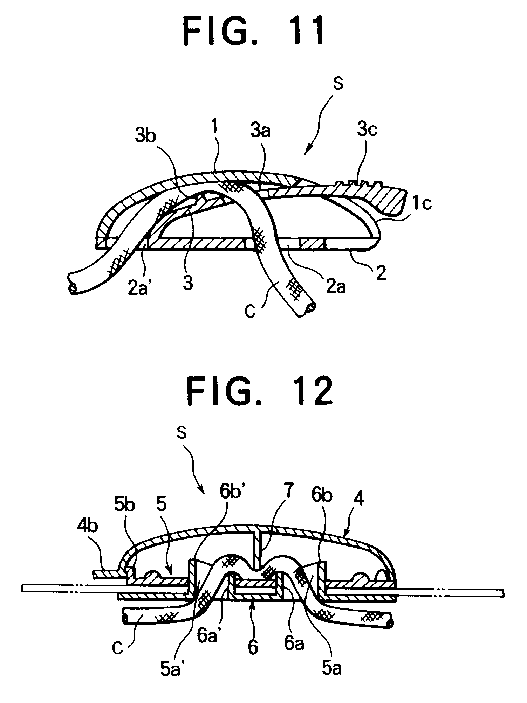

In the cord stoppers S according to the first and second embodiment and their modifications, the cord C is threaded through the cord stopper S from the upper surface to the lower surface. So, one end of the inserted cord C is normally exposed to outside, while the other end is retained as inserted directly into the cord stopper S. FIGS. 11 and 12 show third and fourth embodiments, respectively, in which the inserted ends of the cord C are not exposed to outside so as to improve the decorativity of the stopper.

FIG. 11 is a cross-sectional view of the cord stopper S according to the third embodiment, showing the cord C in a clamped posture. The cord stopper S comprises a base 2, a cover 1 and a resilient release strip 3. The cover 1 has no cord-insertion hole, while the base 2 has a first cord-insertion hole 2a' between the fixed end of the cover 1 and the fixed end of the resilient release strip 3, and a second cord-insertion hole 2a at a position displaced from the center toward the cutout 2c. Regarding other structures, the third embodiment is identical with the first embodiment.

When using the cord stopper S, the cord C is threaded through the cord stopper S to pass through firstly the first cord-insertion hole 2a', a cord-insertion hole 3a of the resilient release strip 3 and finally the second cord-insertion hole 2a of the base 2. In the absence of any force acting on the cord stopper S, from where it is inserted into the first cord-insertion hole 2a' of the base to where it reaches the cord-insertion hole 3a of the resilient release strip 3, the cord C is clamped between the inside surface of the cover 1 and the sawteeth 3b projecting from the resilient release strip 3 as urged upwardly (toward the cover 1). The release end 3c of the resilient release strip 3 is set in a position lower than the peak of the cover 1. Regarding the unclamping of the cord C, the third embodiment is identical with the first embodiment.

In the third embodiment, the cord C is inserted into the cord stopper S from the base side, is then threaded through the cord stopper S and is drawn from the base side again; such inlet and outlet of the cord C are in a common plane. Accordingly, assuming that the cord stopper S is used, like a cord tie, as attached to opposite free ends of a hanging cord, the cord stopper S can be attached to the cord C in pararell thereto without inclination so that the front surface of the cord stopper S is directed completely forwardly, thus increasing its application to ornaments.

FIG. 12 is a cross sectional view of the cord stopper S of the fourth embodiment attached to the fabric F, showing the cord C threaded through the cord stopper S and is in a clamped posture. The cord stopper S comprises a base 5, a cover 4 and an attachment plate 6. The base 5 has a pair of first cord-insertion holes 5a', 5a. The cover 4 has at a position between the first and second cord-insertion holes holes 5a', 5a, a clamp in the form of sawteeth 7 projecting from the inside surface of the cover 4 toward the base 5 and is devoid of any cord-insertion hole. Further, the attachment plate 6 has a pair of first and second surrounding walls 6b', 6b to be fitted in the respective first and second cord-insertion holes 5a', 5a of the base 5, the surrounding walls 6b', 6b respectively defining first and second cord-insertion openings 6a', 6a. Regarding other structures, the fourth embodiment is identical with the second embodiment.

When attaching the cord stopper S of the fourth embodiment to a fabric F or the like, two holes identical in shape with the first and second cord-insertion holes 5a', 5a of the base 5 are previously formed in the fabric F. Then, the fabric F is placed on the lower surface of the base 5 in such a manner that the first and second cord-insertion holes 5a', 5a of the base 5 are aligned with the respective two holes of the fabric F, and the attachment plate 6 is placed on the fabric F from the underside to sandwich the fabric F between the base 5 and the attachment plate 6. At that time, the first and second surrounding walls 6b', 6b of the attachment plate 6 are fitted in the respective first and second cord-insertion holes 5a', 5a, of the base 5 and the corresponding holes of the fabric F, and the pins 6c of the attachment plate 6 are fitted into the respective pin insertion holes 5c of the base 5, thus securing the cord stopper S to the fabric F.

In the cord stopper S thus attached to the fabric F, the cord C is inserted into the cord stopper S from the first cord-insertion opening 6a' of the attachment plate 6, is then threaded through the cord stopper S and is finally drawn outwardly from the second cord-insertion opening 6a again. From where it is inserted into the first cord-insertion opening 6a' of the attachment plate 6 to where it reaches the second cord-insertion opening 6a of the attachment plate 6, the cord C is clamped between the upper surface of the base 5 and the sawteeth 7 projecting from the inside surface of the cover 4. At that time, since the height of the surrounding walls 6b', 6b of each cord-insertion opening 6a', 6a of the attachment plate 6 is set to a value larger than the sum of the thickness of the fabric F and the thickness of the base 5, the cord C would be bent so as to go over the respective surrounding walls 6b', 6b from where it is inserted into the first cord-insertion opening 6a' of the attachment plate 6 to where it reaches the clamp in the form of the sawteeth 7 and from where it is clamped by the sawteeth 7 to where it is drawn outwardly from the second cord-insertion opening 6a of the attachment plate 6, thus increasing the clamping force of the cord stopper S. Regarding the unclamping of the cord C, the fourth embodiment is identical with the second embodiment.

In the fourth embodiment, the cord C is inserted into the cord stopper S from the attachment-plate side, is then threaded through the cord stopper S and is finally drawn outwardly from the attachment-plate side again; such inlet and outlet of the cord C are in a common plane. Accordingly, the cord stopper S can be attached to the cord C in parallel thereto without inclination, or the inserted ends of the cord C is concealed by the back side of a garment or the like, increasing its application as ornaments. Further, since the cord C is accommodated in the cord stopper S, a neat appearance can be given to the cord stopper S, and additionally there is no danger that the cord might be caught in a rotary machine such as rollers. Accordingly the cord stopper is particularly useful when applied to a working uniform.

In each of the foregoing embodiments, it is a cover that an outermost element of the cord stopper and would be depressed when it is hit by a nearby article. Since a cord is not unclamped by depressing the cover, there is no danger that the cord stopper might be unclamped and moved inadvertently.

Further, partly since the sawteeth as projections serving to clamp the cord are situated inside the cord stopper, and partly since the sawteeth are shielded by the cord, adequate safety can be secured. Since the sawteeth bite into the cord when clamping, adequate clamping force can be guaranteed. Furthermore, since the cord stopper can be manufactured in a reduced-thickness type and in any selected from a variety of surface shapes, it is possible to make the cord stopper much fashionable.

Additionally, according to this invention, a high degree of freedom of design can be achieved. For example, it is possible to design, in addition to a cord stopper in which the cord is threaded through the cord stopper from the upper surface to the lower surface in such a manner that one (inserted) end of the cord is normally exposed to outside while the other end is retained as inserted directly inside, other cord stoppers in which the inserted end of the cord is not exposed to outside and which are improved in function as an ornament. Thus this invention is suitable to various uses utilizing these respective functions and characters.

## Claims

1. A cord stopper for retaining at least one cord (C) at a desired position, comprising:
(a) a base (2, 5) having a cord-insertion hole (2a, 5a);
(b) a cover (1, 4) connected to said base (2, 5) and having a cord insertion hole (1a, 4a) at a position out of alignment with said cord-insertion hole (2a, 5a) of said base (2, 5); and
(c) a clamp (3b, 7) situated at a predetermined position between said cord-insertion hole (2a, 5a) of said base (2, 5) and said cord-insertion hole (1a, 4a) of said cover (1, 4) for clamping and securing the cord (C) at the desired position.

2. A cord stopper according to claim 1, wherein said cover (1) and said base (2) have connecting means (1b, 2b) for fixedly connecting said cover (1) and said base (2) with each other.

3. A cord stopper according to claim 2, wherein said connecting means (1b, 2b) includes a number of pins (1b) formed in said cover (1) and a number of pin-insertion holes (2b) formed in said base (2).

4. A cord stopper according to claim 2, wherein said cover (1) has in one end a cutout (1c), said base (2) has a resilient release strip (3) fixed at one end to said base (2) at an end remote from said cutout (1c) and having a free release end (3c) projecting outwardly of said cutout (1c), said resilient release strip (3) having a cord-insertion hole (3a), said clamp being constituted by a projection (3b) extending from a position near the fixed end of said resilient release strip (3) toward an inside surface of said cover (1).

5. A cord stopper according to claim 2, wherein said cover (1) has in one end a cutout (1c), said base (2) has a resilient release strip (3) fixed at one end to said base (2) at an end remote from said cutout (1c) and having a free release end (3c) projecting outwardly of said cutout (1c), said resilient release strip (3) having a cord-insertion hole (3a), said clamp being constituted by a projection (1d) extending from an inside surface of said cover (1) at a position adjacent to said cord-insertion hole (1a) of said cover (1) toward said resilient release strip (3).

6. A cord stopper according to claim 4 or 5, wherein said projection (3b, 1d) is in a form of sawteeth.

7. A cord stopper according to claim 1, wherein said cover (4) is pivotally connected at one end to one end of said base (5) and has a release portion (4b) at the other end, said other end of said cover (4) having an inwardly directed engaging step (4c), said clamp being constituted by a projection (7) extending from an inside surface of said cover (4) toward said base (5), said base (5) having at an end remote from the pivotally connected end an engaging portion (5b) engageable with said engaging step (4c) of said cover (4).

8. A cord stopper according to claim 7, comprising a flat attachment plate (6) attached to a lower surface of said base (5) and having a cord-insertion opening (6a) in alignment with said cord-insertion hole (5a) of said base (5).

9. A cord stopper according to claim 8, wherein said base (5) and said attachment plate (6) have connecting means for fixedly connecting said cover (4) and said base (5) with each other.

10. A cord stopper according to claim 9, wherein said connecting means includes a number of pin-insertion holes (5c) formed in said base (5) and a number of pins (6c) projecting from said attachment plate (6).

11. A cord stopper (S) according to claim 8, wherein said attachment plate (6) has a surrounding wall (6b) extending along a peripheral edge of said cord-insertion opening (6a) and adapted to be fitted in said cord-insertion hole (5a) of said base (5), said surrounding wall (6b) having a free edge inclined to match with said cord-insertion hole (4a) of said cover (4).

12. A cord stopper for retaining at least one cord (C) at a desired position, comprising:
(a) a base (2) having a pair of first and second cord-insertion holes (2a', 2a);
(b) a cover (1) having a cutout (1c) at one end;
(c) connecting means (1b, 2b) for fixedly connecting said base (2) and said cover (1) with each other;
(d) a resilient release strip (3) integrally connected at one end remote from said cutout (1c) of said base (2) and having a free release end (3c) projecting outwardly of said cutout (1c), said release strip (3) having a cord-insertion hole (3a); and
(e) a clamp situated at a predetermined position between the fixed end of said release strip (3) and said cord-insertion hole (3a) for clamping and securing the cord (C) at the desired position.

13. A cord stopper according to claim 12, wherein said clamp is constituted by a projection (3b) extending from said release strip (3) toward an inside surface of said cover (1).

14. A cord stopper (S) according to claim 12, wherein said clamp is constituted by a projection extending from an inside surface of said cover (1) toward said release strip (3).

15. A cord stopper according to claim 13 or 14, wherein said projection (3) is in a form of sawteeth.

16. A cord stopper (S) for retaining at least one cord (C) at a desired position, comprising:
(a) a base (5) having an engaging portion (5b) at one end and also having first and second cord-insertion holes (5a', 5a);
(b) a cover (4) pivotally connected at one end to said base (5) remotely from said engaging portion (5b) and having at the other end a release portion (4b) and an engaging step (4c) engageable with said engaging portion (5b); and
(c) a clamp situated at a predetermined position between said first and second cord-insertion holes (5a', 5a) of said base (5) for clamping and securing the cord (C) at the desired position, said clamp being constituted by a projection (7) extending from an inside surface of said cover (4) toward said base (5).

17. A cord stopper according to claim 16, comprising a flat attachment plate (6) attached to a lower surface of said base (5) via a fabric (F), said attachment plate (6) having first and second surrounding walls (6b', 6b) fitted in the respective cord-insertion holes (5a', 5a) of said base (5), and first and second insertion openings (6a', 6a) formed in said first and second surrounding walls (6b', 6b).
